**Europäisches Patentamt**

**European Patent Office**

**Office européen des brevets**

(19)

(11) **EP 1 342 746 A1**

(12) **EUROPÄISCHE PATENTANMELDUNG**

(43) Veröffentlichungstag:
**10.09.2003 Patentblatt 2003/37**

(51) Int Cl.⁷: **C08J 5/18**

(21) Anmeldenummer: **03003295.7**

(22) Anmeldetag: **25.02.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **06.03.2002 DE 10209847**
**06.03.2002 DE 10209850**

(71) Anmelder: **Mitsubishi Polyester Film GmbH**
**65203 Wiesbaden (DE)**

(72) Erfinder:
- **Kliesch, Holger, Dr.**
  **55252 Mainz (DE)**
- **Heusel, Thomas**
  **65719 Hofheim (DE)**
- **Hora, Franz**
  **65830 Kriftel (DE)**
- **Kiehne, Thorsten, Dr.**
  **65185 Wiesbaden (DE)**
- **Kuhmann, Bodo**
  **65594 Runkel (DE)**
- **Hilkert, Gottfried, Dr.**
  **55291 Saulheim (DE)**
- **Hanold, Christopher**
  **65185 Wiesbaden (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(54) **Biaxial orientierte, hydrolysebeständige Kondensatorfolie aus einem kristallisierbaren Thermoplasten, Verfahren zu ihrer Herstellung und ihre Verwendung**

(57)    Die Erfindung betrifft eine biaxial orientierte, hydrolysebeständige Folie aus einem kristallisierbaren Thermoplasten, deren Dicke im Bereich von 0,5 bis 12 μm liegt. Die Folie enthält mindestens ein Hydrolyseschutzmittel, ist leitfähig beschichtet und zeichnet sich durch ihre geringe Hydrolysegeschwindigkeit und ihre guten dielektrischen Eigenschaften aus. Die Folie besitzt gegebenenfalls mindestens eine zusätzliche Funktionalität gegenüber der Hydrolysebeständigkeit. Insbesondere weist sie eine hohe Durchschlagfestigkeit und einen niedrigen Verlustfaktorauf und darüber hinaus gegebenenfalls eine oder mehrere weitere Funktionalitäten. Die Erfindung betrifft ferner ein Verfahren zur Herstellung der Folie sowie ihre Verwendung.

**EP 1 342 746 A1**

**Beschreibung**

Biaxial orientierte, hydrolysebeständige Folie aus einem kristallisierbaren Thermoplasten, Verfahren zu ihrer Herstellung und ihre Verwendung

Die Erfindung betrifft eine biaxial orientierte, hydrolysebeständige Folie aus einem kristallisierbaren Thermoplasten, deren Dicke im Bereich von 0,5 bis 12 $\mu$m liegt. Die Folie enthält mindestens ein Hydrolyseschutzmittel, ist leitfähig beschichtet und zeichnet sich durch ihre geringe Hydrolysegeschwindigkeit und ihre guten dielektrischen Eigenschaften aus. Insbesondere weist sie eine hohe Durchschlagfestigkeit und einen niedrigen Verlustfaktor auf. Diese Folie besitzt gegebenenfalls außerdem mindestens eine zusätzliche Funktionalität gegenüber der Hydrolysebeständigkeit. Der Ausdruck zusätzliche Funktionalität beinhaltet den Schrumpf und die Lötbarkeit. Die Erfindung betrifft ferner ein Verfahren zur Herstellung der Folie sowie ihre Verwendung.

Folien aus Thermoplasten im angegebenen Dickenbereich, die sich zur Herstellung von Folienkondensatoren eignen, sind hinreichend bekannt.

Folien zur Herstellung von Kondensatoren müssen hohen Ansprüchen hinsichtlich ihrer elektrischen Durchschlagfestigkeit und ihrer dielektrischen Absorption genügen, um im Kondensator eine ausreichende Spannungsbelastbarkeit zu gewährleisten und um sich beim Lade- und Entladevorgang nur geringfügig zu erwärmen. Diese wird, wie u.a. in EP-A-0-791 633 beschrieben, durch eine hohe Reinheit der eingesetzten Rohstoffe gewährleistet. Daher ist es in der Regel notwendig, auf Additive zu verzichten (Ausnahmen bilden anorganisch mineralische Additive wie die in der Regel verwendeten SiO2- oder $CaCO_3$-Pigmente und Polymere mit sehr geringer Dielektrizitätskonstante wie Polystyrol u.ä.), um die elektrischen Eigenschaften nicht negativ zu beeinflussen.

In konventionellen Folienkondensatoren aus kristallisierbaren Thermoplasten kommen in der Regel Polyethylenterephthalat- oder Polyethylennaphthalat-Homopolymere zum Einsatz. Insbesondere Polyethylenterephthalat neigt aber bei Temperaturen oberhalb der Glastemperatur und insbesondere oberhalb von 100 °C zu hydrolytischem Abbau. Bei vielen Einsatzgebieten für Folienkondensatoren, beispielsweise im Automobilbereich, sind Temperaturen bis 130 °C und teilweise sogar darüber jedoch nicht selten. Durch den hydrolytischen Abbau werden die Folienlagen im Kondensator mit der Zeit brüchig und können so zum Versagen des Kondensators führen. Polyethylennaphthalat (PEN) ist zwar hydrolysebeständiger, hat aber einen deutlich höheren Preis und wird damit für die meisten Einsatzgebiete unwirtschaftlich und baut bei längerem Einsatz bei den genannten Temperaturen ebenfalls deutlich ab. Die Hydrolyseempfindlichkeit steigt in der Regel weiter an, wenn statt der Homopolymere Copolyester wie Polyethylenterephthalat (PET) mit Isophthalsäureanteil zum Einsatz kommen.

Zwar kann durch ein Ummanteln der Kondensatoren mit einer Box mit Wasserdampfbarriere ein gewisser Hydrolyseschutz erreicht werden, dieser ist aber nur von geringer Wirkung, da sich in gebräuchlichen Boxen (z.B. aus PPS) nach kurzer Zeit wieder ein nennenswerter Wassserdampfdruck aufbaut. Die Box erzeugt zudem weitere Kosten und beansprucht Platz, der in den immer weiter miniaturisierten elektronischen Bauteilen nicht zur Verfügung steht. Auch werden in vielen Anwendungen keine klassischen bedrahteten Kondensatoren mehr eingesetzt, sondern oberflächenlötbare, sogenannte SMD (Surface-Mounting-Device)-Kondensatoren verwendet.

Hydrolysebeständigere Polyesterrohstoffe, die durch Verwendung von Carbodiimiden erhalten werden, sowie daraus hergestellte Fasern und Folien sind bekannt (US 5 885 709, EP 0 838 500, CH 621 135). Diese Rohstoffe und Folien erfüllen jedoch nicht die für Kondensatorfolien notwendigen Anforderungen an die dielektrischen und Verarbeitungseigenschaften.

PET-Folien, die sich zur Herstellung von SMD-Kondensatoren eignen, sind bekannt und u.a. in WO 98/13415 beschrieben. Diese Folien sind jedoch nicht hydrolysebeständig ausgerüstet.

Aufgabe der vorliegenden Erfindung ist es, die beschriebenen Nachteile des Standes der Technik zu vermeiden.

Gegenstand der Erfindung ist daher eine biaxial orientierte, hydrolysebeständige Folie, die als Hauptbestandteil einen kristallisierbaren Thermoplasten enthält und eine Dicke im Bereich von 0,5 bis 12,0 $\mu$m, vorzugsweise 1,2 bis 7,0 $\mu$m, aufweist, eine elektrische Durchschlagfestigkeit AC von $\geq$ 190 kV/mm und eine Rauheit $R_a$ von $\leq$ 150 nm besitzt und die mindestens einen Hydrolysestabilisator enthält sowie leitfähig beschichtet ist und gegebenenfalls mit mindestens einer weiteren Funktionalität versehen ist. Die Erfindung betrifft ferner ein Verfahren zur Herstellung dieser Folie und ihre Verwendung.

Die Folie gemäß der Erfindung zeichnet sich durch ihre Hydrolysebeständigkeit und eine hohe Durchschlagfestigkeit aus. Ferner besitzt sie eine niedrige dielektrische Absorption, (d.h. einen niedrigen dieelektrischen Verlustfaktor), lässt sich wirtschaftlich herstellen und eignet sich infolge ihrer leitfähigen Beschichtung zur Herstellung von elektrisch stabilen Kondensatoren, welche ebenfalls hydrolysebeständig und gegebenenfalls SMD-lötfähig sind. Ein solcher SMD-Kondensator benötigt keine Box, bietet somit den Vorteil eines besonders geringen Platzbedarfes und weist eine längere Lebensdauer auf als Kondensatoren aus unstabilisierten Thermoplasten.

Des weiteren kann die Folie gemäß der Erfindung auch ohne Verlust ihrer Eigenschaften vor ihrer Beschichtung rezykliert werden, d.h. dass das Regenerat wieder eingesetzt werden kann.

Eine hohe Durchschlagfestigkeit bedeutet, dass die Durchschlagsfestigkeit der Folie gemessen nach DIN 53481 nach der Kugel/Platte-Methode bei Wechselspannung (AC) $\geqslant$ 190 kV/mm, vorzugsweise $\geqslant$ 240 kV/mm und insbesondere $\geqslant$ 280 kV/mm ist.

Ein niedriger dielektrischer Verlustfaktor (tan delta) bedeutet, dass er bei 30 °C und 1 kHz Werte von $\leq$ 0,0075, bevorzugt < 0,0055 und insbesondere $\leq$ 0,0050 und bei 120 °C und 1 kHz Werte von $\leq$ 0,03, bevorzugt $\leq$ 0,022 und insbesondere $\leq$ 0,019 aufweist.

Der Ausdruck "elektrisch stabile Kondensatoren" bedeutet, dass die mit Hydrolysestabilisatoren ausgerüsteten Kondensatoren eine deutlich verlängerte Lebensdauer besitzen und keine hohen Ausfallraten in der Praxis aufweisen, verglichen mit nicht hydrolysestabil ausgerüsteten Kondensatoren.

SMD-lötfähig bedeutet, dass sich die Kondensatoren bei den für das Reflow-Löten üblichen Temperaturen oberhalb von 220°C nicht mechanisch verformen und elektrisch stabil bleiben.

Die Folie enthält als Hauptbestandteil einen kristallisierbaren Thermoplasten. Geeignete kristallisierbare bzw. teilkristalline Thermoplaste sind beispielsweise Polyethylenterephthalat (PET), Polyethylennaphthalat (PEN), Polybutylenterephthalat (PBT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PEN und PETBB bevorzugt sind.

Zur Herstellung der Thermoplaste können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA), auch Isophthalsäure (IPA), *trans*- und/oder *cis*-1,4-Cyclohexandimethanol (*c*-CHDM, *t*-CHDM oder *c*/t-CHDM) und andere geeignete Dicarbonsäurekomponenten (oder Dicarbonsäureester) und Diolkomponenten verwendet werden.

Gemäß der Erfindung versteht man unter kristallisierbaren Thermoplasten

- kristallisierbare Homopolymere,
- kristallisierbare Copolymere,
- kristallisierbare Compounds,
- kristallisierbares Recyklat und
- andere Variationen von kristallisierbaren Thermoplasten.

Bevorzugt sind hierbei Polymere, bei denen die Dicarbonsäurekomponente zu 95 % und mehr, insbesondere zu 98 % und mehr aus TA oder NDA besteht. Bevorzugt sind weiterhin Thermoplaste, bei denen die Diolkomponente zu 90 % und mehr, insbesondere zu 93 % und mehr aus EG besteht. Bevorzugt sind auch Polymere bei denen der Diethylenglykolanteil am Gesamtpolymer im Bereich 1 von 2 % liegt. Bei allen vorgenannten Mengenangaben bleibt der Hydrolysestabilisator unberücksichtigt.

Die Folie gemäß der Erfindung enthält weiterhin anorganische oder organische Verbindungen, die zur Einstellung der Oberflächentopographie benötigt werden. Eine zu hohe Rauheit ($R_a$-Wert) beeinträchtigt jedoch die elektrische Ausbeute in der Kondensatorfertigung. Daher hat es sich als zweckmäßig erwiesen, wenn die im folgenden beschriebenen Werte für die Rauheit eingestellt werden, die je nach Stärke der Folie unterschiedliche Werte haben können. Die Menge der eingesetzten Verbindungen ist abhängig von den verwendeten Substanzen und ihrer Partikelgröße. Letztere liegt im Bereich von 0,01 bis 10,0, vorzugsweise 0,1 bis 5,0 und insbesondere 0,3 bis 3,0 µm. Bei einer 3,6 - 12,0 µm dicken Folie wird ein $R_a$-Wert von $\leq$ 150 nm und vorzugsweise von $\leq$ 100 nm angestrebt. Bei einer 2,4 bis 3,5 µm dicken Folie liegt der $R_a$-Wert bei $\leq$ 100 nm und vorzugsweise bei $\leq$ 70 nm, während er bei Foliendicken unterhalb von 2,4 µm Werte von $\leq$ 70 nm und vorzugsweise von $\leq$ 50 nm aufweist.

Geeignete Verbindungen zur Erzielung der Rauheit sind z.B. Kalziumcarbonat, Apatit, Siliziumdioxid, Titandioxyd, Aluminiumoxyd, vernetztes Polystyrol, Zeolithe und andere Silikate und Aluminiumsilikate. Diese Verbindungen werden im allgemeinen in Mengen von 0,05 bis 1,5 %, vorzugsweise 0,1 bis 0,6 % eingesetzt. Durch einfache Mischversuche und anschließendem Messen der $R_a$-Werte lässt sich die Rauheit je nach eingesetzter Verbindung leicht bestimmen. Beispielsweise führt eine Kombination aus den Siliziumdioxydpigmenten 0,11 % ®Sylysia 320 (Fuji, Japan) und 0,3 % ®Aerosil TT600 (Degussa, Deutschland) bei einer 5 µm Folie zu einem $R_a$-Wert von 70 nm. Ebenso ergibt eine Folie mit der Dicke von 5 µm, die 0,6 % ®Omyalite (Kalziumkarbonat der Firma Omya, Schweiz) mit einer mittleren Partikelgröße von 1,2 µm enthält, einen $R_a$- Wert von 60 nm. Verwendet man dieselben Rezepturen zur Herstellung einer 1,4 µm dicken Folie so erhält man einen $R_a$-Wert von 35 nm $\pm$ 5 nm.

Zum Erreichen des elektrischen Verlustfaktors tan delta und der Durchschlagfestigkeit AC hat es sich als zweckmäßig erwiesen, wenn der Schmelzewiderstand des verwendeten Thermoplasts im Mittel einen Wert von $\geq$ 1 • $10^7$ $\Omega$.cm, vorzugsweise $\geq$ 10 • $10^7$ $\Omega$.cm und insbesondere $\geq$ 25 • $10^7$ $\Omega$.cm besitzt. Der Mittelwert wird berechnet nach der Formel

$$1 /(X_1 \cdot 1/W_1 + X_2 \cdot 1/W_2 + ..... + X_n \cdot 1/W_n)$$

wobei

$X_1$ ($x_n$) = Anteil der Thermoplastchips der Komponente 1 (n) und

$W_1$ ($W_n$) = Widerstand der Thermoplastchips der Komponente 1 (n) sind

Die Standardviskosität SV (DCE) der Folie, gemessen in Dichloressigsäure nach DIN 53728, liegt im allgemeinen im Bereich von 700 bis 1100, vorzugsweise von 800 bis 980.

Die Folie enthält weiterhin einen Hydrolysestabilisator, der bevorzugt über die sogenannte Masterbatch-Technologie direkt bei der Folienherstellung zudosiert wird, wobei der Anteil des Hydrolysestabilisators im Bereich von 0,2 bis 10,0 Gew.-%, vorzugsweise von 1,0 bis 4,0 Gew.-%, bezogen auf das Gewicht des kristallisierbaren Thermoplasten, liegt. Im Masterbatch beträgt der Anteil des Hydrolysestabilisators allgemein 5,0 bis 60,0 Gew.-%, bevorzugt 10,0 bis 50,0 Gew.-%, jeweils bezogen auf das Gesamtgewicht des Masterbatches.

Geeignete Hydrolysestabilisatoren sind beispielsweise Carbodiimide, vorzugsweise polymere Carbodiimide, wie ®P100 (Fa. Rheinchemie, Deutschland) oder ®Stabilisator9000 (Fa. Raschig, Deutschland).

Neben den erwähnten Additiven kann die Folie zusätzlich weitere Komponenten wie Flammschutzmittel und/oder Radikalfänger und/oder andere Polymere wie Polyetherimide enthalten.

Der Hydrolysestabilisator wird vorzugsweise über die Masterbatch-Technologie zugegeben. Dazu wird er zunächst in einem Trägermaterial voll dispergiert. Als Trägermaterial kommen der Thermoplast selbst, z.B. das Polyethylenterephthalat oder auch andere Polymere, die mit dem Thermoplasten verträglich sind, in Frage. Nach der Zudosierung zu dem Thermoplasten für die Folienherstellung schmelzen die Bestandteile des Masterbatches während der Extrusion und werden so in dem Thermoplasten gelöst.

Die Herstellung des Masterbatch kann auch in-situ erfolgen, d.h. die Monomeren zur Herstellung des Thermoplast werden gemeinsam mit den weiteren Komponenten, z.B. den Hydrolysestabilisatoren und/oder den Verbindungen zur Erzielung der Rauheit vermischt und die erhaltenen Mischungen polykondensiert.

Zur wirtschaftlichen Herstellung zählt, dass die Rohstoffe beziehungsweise. Rohstoffkomponenten, die zur Herstellung der Folie benötigt werden, mit handelsüblichen Industrietrocknern, wie Vakuumtrockner ( d.h. unter vermindertem Druck), Wirbelschichttrockner, Fließbetttrockner oder Festbetttrockner (Schachttrockner), getrocknet werden können. Wesentlich ist, dass die erfindungsgemäß eingesetzten Rohstoffe nicht verkleben und nicht thermisch abgebaut werden. Die genannten Trockner arbeiten im allgemeinen bei normalen Druck mit Temperaturen zwischen 100 und 170 °C, wo nach dem Stand der Technik hydrolysestabil ausgerüstete Rohstoffe verkleben können und die Trockner und/oder Extruder zusetzen. Bei einem Vakuumtrockner, der die schonendsten Trockenbedingungen erlaubt, durchläuft der Rohstoff einen Temperaturbereich von ca. 30 °C bis 130 °C bei einem vermindertem Druck von 50 mbar. Auch bei diesen Trocknern mit Trocknungstemperaturen unter 130 °C werden in der Kondensatorfolienproduktion Nachtrockner (Hopper) mit Temperaturen oberhalb von 100 °C benötigt, bei denen entsprechend ausgerüstete Rohstoffe nach dem Stand der Technik dann verkleben können. Im allgemeinen ist ein Nachtrocknen in einem Hopper bei Temperaturen von 100 bis 130 °C und einer Verweilzeit von 3 bis 6 Stunden erforderlich.

Die Folie gemäß der Erfindung wird im allgemeinen nach an sich bekannten Extrusionsverfahren hergestellt.

Im Rahmen eines dieser Verfahren wird so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längs- und auch die Querstreckung bei $T_g$ + 10 °C bis $T_g$ + 60 °C ($T_g$ = Glastemperatur der Folie) durchgeführt. Das Längsstreckverhältnis liegt allgemein im Bereich von 2,0 : 1 bis 6,0 : 1, vorzugsweise von 3,0 : 1 bis 4,5 : 1. Das Querstreckverhältnis liegt allgemein im Bereich von 2,0 : 1 bis 5,0 : 1, vorzugsweise von 3,0 : 1 bis 4,5 : 1 und das der gegebenenfalls. durchgeführten zweiten Längs- und Querstreckung liegt bei 1,1 : 1 bis 5,0 : 1.

Die erste Längsstreckung kann gegebenenfalls gleichzeitig mit der Querstreckung (Simultanstreckung) durchgeführt werden. Als besonders günstig hat es sich erwiesen, wenn das Streckverhältnis in Längs- und Querrichtung jeweils größer als 3,5 ist.

Bei der nachfolgenden Thermofixierung wird die Folie etwa 0,1 bis 10 s lang bei einer Temperatur von 180°C bis 260 °C, vorzugsweise 220 bis 245 °C gehalten. Anschließend an beziehungsweise beginnend in der Thermofixierung wird die Folie um 0 bis 15 %, vorzugsweise um 1,5 bis 8 % in Quer- und gegebenenfalls auch in Längsrichtung relaxiert und die Folie in üblicher Weise abgekühlt und aufgewickelt.

In einer bevorzugten Ausführungsform für SMD-Kondensatoren wird die Folie bei der nachfolgenden Thermofixierung etwa 0,1 bis 10 s lang bei einer Temperatur von 180 bis 260 °C, vorzugsweise 220 bis 245 °C, gehalten. Anschließend an bzw. während der Thermofixierung wird die Folie, vorzugsweise in mindestens zwei Stufen, um insgesamt 4 bis 15 %, vorzugsweise um 5 bis 8 %, in Querrichtung relaxiert, wobei mindestens die letzten 2 % der Gesamtrelaxation bei Temperaturen unterhalb von 180 °C, vorzugsweise bei 180 bis 130 °C, stattfinden. Die Folie wird anschließend in üblicher Weise abgekühlt und aufgewickelt. Eine Relaxation kann auch in Längsrichtung erfolgen.

Zum Erreichen der genannten Durchschlagfestigkeiten und der gewünschten elektrischen Stabilität der Kondensatoren hat es sich als zweckmäßig erwiesen, wenn die Längsdickenschwankung der Folie im allgemeinen nicht mehr als 20 %, vorzugsweise von weniger als 15 % und insbesondere von weniger als 10 % der Foliendicke ausmacht, bezogen auf die mittlere Dicke der Folie. Hierbei ist es günstig, wenn die Temperaturen im Extrusionsbereich (Düse + Schmelzeleitung + Extruder) in der Größenordnung von $T_s$ ($T_s$ = Schmelzpunkt der Folie) +20 bis +50 °C liegen. Besonders geeignet sind Temperaturen von $T_s$ + 30 bis $T_s$ +45 °C.

Die aufgewickelte Folie wird anschließend in konventionellen Metallisierungsmaschinen (z.B. von Fa. Applied Films vorm. Leybold) nach den bekannten Verfahren metallisiert (eine Beschichtung mit einem anderen leitfähigen Material wie leitfähigen Polymeren ist ebenfalls möglich) und in die gewünschte Breite zur Kondensatorherstellung konfektioniert. Aus diesen metallisierten Schmalschnitten werden Kondensatorwickel gefertigt, anschließend flachgepresst (Temperaturen zwischen 0 und 280 °C), schoopiert und kontaktiert.

In einer bevorzugten Ausführungsform weist die Folie nach der Metallisierung (bzw. sonstigen leitfähigen Beschichtung) einen Längsschrumpf bei 200 °C (15 min) von ≤ 5 %, vorzugsweise von ≤: 4 % und insbesondere von ≤ 3,5 % auf. Dieser Längsschrumpf ist jedoch nicht kleiner als 1 %. Der Querschrumpf bei 200 °C (15 min) besitzt Werte von ≤ 2 % vorzugsweise von ≤ 1 % und insbesondere von ≤ 0,5 % auf. Der Wert des Schrumpfens ist in TD jedoch stets ≥ -0,5 %.

Eine weitere Möglichkeit ist das Wickeln der Schmalschnitte auf Räder oder Stäbe, die schoopiert, im Ofen thermostabilisiert (Temperaturen zwischen 100 und 280 °C) und in die entsprechenden Kondensatorbreiten geschnitten werden (Schichtkondensatoren), welche dann abschließend kontaktiert werden. Das Tempern kann dabei gegebenenfalls auch vor dem Schoopen erfolgen.

Überraschend ist, dass die Folie gemäß der Erfindung trotz der Ausrüstung mit dem Hydrolysestabilisator keinen untolerierbar höheren dielektrischen Verlustfaktor (Tangens) aufweist als vergleichbar hergestellte Folien ohne diesen Zusatz.

Die Lebensdauervon Kondensatoren aus mit Hydrolysestabilisatoren ausgerüsteten Folien ist um mehr als den Faktor zwei gegenüber Kondensatoren mit herkömmlichen Folien erhöht. Überraschend ist dabei auch, dass die Lebensdauer der aus PEN-Folien mit Hydrolysestabilisator hergestellten Kondensatoren nochmals drastisch erhöht ist und im Bereich von Polyphenylensulfid (PPS)-basierten Kondensatoren liegt.

Besonders überraschend war auch die hohe Durchschlagfestigkeit der Folien gemäß der Erfindung und die sehr guten elektrischen Eigenschaften. Die Folien eignen sich daher besonders gut zur Herstellung von Kondensatoren, vorzugsweise Starterkondensatoren. So zeigen diese Kondensatoren bei Durchgang von hohen Stromflüssen keine höheren Ausfallraten in der Spannungsprüfung und in ihrer Lebensdauer.

In den nachfolgenden Ausführungsbeispielen erfolgt die Messung der einzelnen Eigenschaften gemäß den angeführten Normen bzw. Verfahren.

*Standardviskosität (SV) und intrinsische Viskosität (IV)*

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität:

$$IV = [\eta] = 6,907 \cdot 10^{-4}\ SV\ (DCE) + 0,063096\ [dl/g]$$

*Rauheit*

Die Rauheit Ra der Folie wird nach DIN 4768 bei einem Cut-off von 0,25 mm bestimmt.

*Elektrische Durchschlagfestigkeit*

Die elektrische Durchschlagfestigkeit wird nach DIN53481 bei Wechselspannung (50 Hz) als Mittelwert von 10 Messstellen angegeben.

*Verlustfaktor (tangens delta)*

Der Verlustfaktor wird in Anlehnung an DIN53483 bestimmt.

*Spannungsprüfung*

An 100 Exemplaren der gefertigten Kondensatoren wird eine Spannung für jeweils 2 Sekunden angelegt. Die Spannung richtet sich nach der Dicke der Einsatzfolie und berechnet sich nach Spannung in Volt = 69•(Dicke in µm)$^{1'3629}$.

Der Spannungstest gilt bei jedem Kondensator als bestanden, wenn die Spannung während der zwei Sekunden um nicht mehr als 10 % abnimmt. Der Gesamttest gilt als bestanden, wenn von den eingesetzten Kondensatoren höchstens 2 ausfallen.

*Lebensdauer*

100 Kondensatoren werden bei 125°C für 500 Stunden in einem Autoklaven bei 50 % rel. Luftfeuchte gelagert und vor und nach dieser Zeit der Spannungsprüfung unterzogen. Der Test gilt als bestanden, wenn von den eingesetzten Kondensatoren, die eingangs den Spannungstest bestanden haben, nach der Temperung höchstens 2 ausfallen.

*Längsdickenschwankung*

Die Dicke wird auf einem 10 Meter langen Folienstreifen entweder kontinuierlich mittels kapazitiver Dickenmessung oder per Taster alle 2 cm bestimmt. Die minimale gemessene Dicke wird von der maximalen abgezogen und das Resultat in Prozent der mittleren Dicke angegeben.

*Schmelzeleitfähigkeit / Schmelzewiderstand*

15 g Rohstoff werden in ein Glasrohr verbracht und 2 Stunden bei 180 °C getrocknet. Das Rohrwird in ein 285 °C heißes Ölbad getaucht und evakuiert. Durch schrittweises Absenken des Drucks auf 0,1 • 10$^{-2}$ bar wird die Schmelze blasenfrei gemacht (entschäumt). Das Rohr wird anschließend mit Stickstoff geflutet und zwei auf 200 °C vorgeheizten Elektroden (zwei Platinbleche (A = 1 cm$^2$) im Abstand von 0,5 cm voneinander) langsam in die Schmelze eingetaucht. Nach 7 Minuten erfolgt bei 100 V Messspannung (High Resistance Meter 4329 A von Hewlett Packard) die Messung, wobei der Messwert zwei Sekunden nach dem Anlegen der Spannung genommen wird.

*Schrumpf*

Der thermische Schrumpf wird an 10 cm großen Quadraten, ausgeschnitten aus der Folie, bestimmt. Die Kantenlänge der nicht aufgeheizten Proben ($L_o$) werden genau ausgemessen und die Proben 15 Minuten in einem Umlufttrockenschrank bei der jeweils angegebenen Temperatur getempert. Die getemperten Proben (L) werden dem Trockenschrank entnommen und eine entsprechende Längskante bei Raumtemperatur genau vergleichend gemessen.

$$Schrumpf\ (\%) = \frac{Lo - L}{Lo} x\ 100$$

*SMD-Lötbarkeit*

Die aus der Folie hergestellten Kondensatoren werden für 2 Minuten einer Hitzebehandlung in einem Ofen bei 235 °C unterworfen. Anschließend werden sie der Spannungsprüfung wie oben angegeben unterzogen. Der Test gilt jedoch nur dann als bestanden, wenn optisch keine Deformationen der Kondensatoren zu erkennen sind. Deformierte Kondensatoren können in der Praxis nicht gelötet werden.

<u>Beispiele 1 bis 7 und Vergleichsbeispiele V1 bis V4</u>

Es wurden Folien unterschiedlicher Dicke (siehe Tabelle 1) wie nachstehend beschrieben hergestellt. Daraus wurden Kondensatoren wie im Folgenden beschrieben gefertigt.

*Folienherstellung* (Beispiele 1- 4 und Vergleichsbeispiele V1 und V2)

Thermoplast-Chips wurden gemäß den in den Beispielen angegebenen Verhältnissen gemischt und in einem Wirbelschichttrockner bei 155 °C für 1 Minute vorkristallisiert, anschließend für 3 Stunden in einem Schachttrockner bei 150 °C getrocknet und bei 290 °C extrudiert. Das geschmolzene Polymer wurde aus einer Düse über eine Abzugswalze abgezogen. Der Film wurde um den Faktor 3,8 in Maschinenrichtung bei 116 °C gestreckt und in einem Rahmen bei 110 °C eine Querstreckung um den Faktor 3,7 durchgeführt. Anschließend wurde die Folie bei 230 °C thermofixiert und in Querrichtung um 4 % bei Temperaturen von 200 bis 180 °C relaxiert.

*Kondensatorherstellung* (Beispiele 1- 4 und Vergleichsbeispiele V1 und V2)

Die Folie wurde jeweils mit einer ca. 500 Ångstrøm dicken Aluminiumschicht bedampft, wobei mittels Abdeckbändern ein unmetallisierter Streifen von 2 mm Breite zwischen je 18 mm breiten, metallisierten Streifen erzeugt und die Folie anschließend in 10 mm breite Streifen geschnitten wird, so dass am Rand der 1 mm breite, unmetallisierte Streifen (Freirand) verbleibt. Zwei je drei Meter lange Streifen, einer mit dem Freirand auf der linken Seite und einer mit dem Freirand auf der rechten Seite, werden gemeinsam auf einen Metallstift mit drei mm Durchmesser aufgewickelt. Dabei haben die beiden Streifen einen Versatz von 0,5 mm in der Breitenrichtung. Die Wickel werden anschließend bei 140 °C für 5 Minuten mit einem Druck von 50 kg/cm$^2$ flachgepresst. Die so entstandenen Wickel werden auf beiden Seiten schoopiert und mit Kontaktdrähten versehen.

*Folienherstellung* (Beispiele 5 - 7 und Vergleichsbeispiele V3 - V4)

Thermoplast-Chips und die weiteren Bestandteile wurden gemäß den in den Beispielen angegebenen Verhältnissen gemischt und in einem Wirbelschichttrockner bei 155 °C für 1 Minute vorkristallisiert, anschließend für 3 Stunden in einem Schachttrockner bei 150 °C getrocknet und bei 290 °C extrudiert. Das geschmolzene Polymer wurde aus einer Düse über eine Abzugswalze abgezogen. Der Film wurde um den Faktor 3,8 in Maschinenrichtung bei 116 °C gestreckt und in einem Rahmen bei 110 °C eine Querstreckung um den Faktor 3,7 durchgeführt. Anschließend wurde die Folie bei 239 °C thermofixiert und in Querrichtung um 4 % bei Temperaturen von 230 - 190 °C und anschließend nochmals um 3 % bei Temperaturen von 180 - 130 °C relaxiert.

*Kondensatorherstellung* (Beispiele 5 - 7 und Vergleichsbeispiele V3 - V4)

Die Folie wurde jeweils mit einer ca. 500 Ängstrøm dicken Aluminiumschicht bedampft, wobei mittels Abdeckbändern ein unmetallisierter Streifen von 2 mm Breite zwischen je 18 mm breiten, metallisierten Streifen erzeugt und die Folie anschließend in 10 mm breite Streifen geschnitten wurde, so dass am Rand der 1 mm breite, unmetallisierte Streifen (Freirand) verblieb. Zwei je 600 Meter lange Streifen, einer mit dem Freirand auf der linken Seite und einer mit dem Freirand auf der rechten Seite, wurden gemeinsam auf ein Metallrad mit 20 cm Durchmesser aufgewickelt. Dabei hatten die beiden Streifen einen Versatz von 0,5 mm in der Breitenrichtung. Oberhalb und unterhalb der metallisierten Streifen wurden je 10 Lagen unmetallisierte Folie aufgewickelt. Über der obersten Lage wurde ein Metallband mit einem Druck von 0,1 kg/cm$^2$ festgezogen. Der Wickel auf dem Rad wurde anschließend auf beiden Seiten schoopiert, mit einer 0,2 mm dicken Silberschicht bedampft und bei 195 °C für 60 Minuten im Ofen (geflutet mit trockenem Stickstoff) getempert. Von dem Wickelrad wurde anschließend das Metallband entfernt und dann im Abstand von 0,7 cm in einzelne Kondensatoren geschnitten.

*Verwendete Rohstoffe*

Rohstoff R1:      PET (Typ Typ M 03, KoSa), SV-Wert 820
Rohstoff R2:      PEN, SV-Wert 900
Masterbatch MB1:  15,0 Gew.-% Stabilisator 9000 und 85,0 Gew.% PET, SV-Wert 860
Masterbatch MB2:  1,0 Gew.-% Sylysia 320, 3,0 % Gew.-% Aerosil TT600 und 96,0 Gew.-% PET, SV-Wert 800
Masterbatch MB3:  15,0 Gew.-% Stabilisator 9000 und 85,0 Gew.% PEN, SV-Wert 900
Masterbatch MB4:  1,0 Gew.-% Sylysia 320, 3,0 % Gew.-% Aerosil TT600 und 96,0 Gew.-% PEN, SV-Wert 900

Der Schmelzewiderstand der eingesetzten Rohstoffe lag im Bereich von 25 $10^7$ bis 30. $10^7\Omega$ cm.

Die Folien wurden mit den Zusammensetzungen gemäß Tabelle 1 hergestellt.

Tabelle 1

| Beispiel | Foliendicke μm) | Zusammensetzung |
|---|---|---|
| 1 | 2 | 11,0 Gew.-% MB2, 10,0 Gew.-% MB1 und 79,0 Gew.-% R1 |
| 2 | 6 | 8,0 Gew.-% MB2, 10,0 Gew.-% MB1 und 82,0 Gew.-% R1 |
| 3 | 6 | wie Beispiel 2, jedoch Extrusionstemperatur 270 °C |
| 4 | 6 | 8,0 Gew.-% MB4, 10,0 Gew.-% MB3 und 82,0 Gew.-% R2, Extrusionstemperatur 305 °C, Streckungen bei 141 °C |
| 5 | 2 | 11,0 Gew.-% MB2, 10,0 Gew.-% MB1 und 79,0 Gew.-% R1 |
| 6 | 6 | 8,0 Gew.-% MB2, 10,0 Gew.-% MB1 und 82,0 Gew.-% R1 |
| 7 | 6 | 8,0 Gew.-% MB4, 10,0 Gew.-% MB3 und 82,0 Gew.-% R2, Extrusionstemperatur 305 °C, Streckungen bei 141°C. Anschließend wurde die Folie bei 247 °C thermofixiert und in Querrichtung um 4 % bei Temperaturen von 247 - 190 °C und dann nochmals um 3 % bei Temperaturen von 180 - 150 °C relaxiert |
| V1 | 2 | 11,0 Gew.-% MB2 und 89,0 Gew.-% R1 |
| V2 | 6 | 8,0 Gew.-% MB2 und 92,0 Gew.-% R1 |
| V3 | 2 | 11,0 Gew.-% MB2, 20,0 Gew.-% MB1 und 69,0 Gew.-% R2 Bei diesem Beispiel wurde die Folie im Unterschied zu Beispiel 5 in Querrichtung nur um 4 % bei Temperaturen von 200 - 180 °C, d.h. in einem niedrigeren Verhältnis, relaxiert. |
| V4 | 2 | 11,0 Gew.-% MB2 und 89,0 Gew.-% R1 |

Die Eigenschaften dieser Folien und der daraus hergestellten Kondensatoren sind aus der Tabelle 2 zu entnehmen.

Während in den Beispielen 1 bis 4, d.h. bei den Beispielen gemäß der Erfindung, die Hydrolysebeständigkeit der Kondensatoren einwandfrei ist, ist die Hydrolysebeständigkeit und damit die Lebensdauer in den Vergleichsbeispielen 1 und 2 ungenügend. In den Beispielen 5 bis 7, d.h. bei den Beispielen gemäß der Erfindung, ist die Hydrolysebeständigkeit der Kondensatoren einwandfrei, und die Kondensatoren sind SMD-lötfähig. Im Vergleichsbeispiel 3 ist die Hydrolysebeständigkeit einwandfrei, die SMD-Lötfähigkeit ist aber nicht gegeben. Im Vergleichsbeispiel 4 ist die Hydrolysebeständigkeit nicht gegeben, die SMD-Lötfähigkeit ist aber einwandfrei.

Tabelle 2

| Eigenschaften | | Beispiele | | | | | |
|---|---|---|---|---|---|---|---|
| | | 1 | 2 | 3 | 4 | V1 | V2 |
| Dicke | µm | 1,97 | 5,98 | 5,97 | 5,95 | 1,96 | 6,03 |
| Rauheit $R_a$ | nm | 41 | 54 | 51 | 62 | 38 | 55 |
| Durchschlagfestigkeit | V/µm | 304 | 315 | 294 | 318 | 312 | 320 |
| Tangens bei 120 °C 1kHz | | 0,018 | 0,017 | 0,017 | 0,012 | 0,014 | 0,013 |
| Tangens bei 30 °C 1 kHz | | 0,0049 | 0,0048 | 0,0049 | 0,0043 | 0,0045 | 0,0044 |
| Spannungsprüfung | +/- | + | + | (+) | + | + | + |
| Lebensdauer | +/- | + | + | + | ++ | - | - |
| Längsdickenschwankung | % | 8 | 5 | 22 | 10 | 9 | 3 |
| SV | | 883 | 894 | 887 | 895 | 783 | 775 |

+ = gut     ++ = sehr gut     (+) = mäßig     - = schlecht

Tabelle 3

| Eigenschaften | | Beispiele | | | | |
|---|---|---|---|---|---|---|
| | | 5 | 6 | 7 | V4 | V3 |
| Dicke | µm | 1,97 | 5,98 | 5,95 | 1,96 | 1,98 |
| Rauheit $R_a$ | nm | 39 | 55 | 62 | 37 | 36 |
| Durchschlagfestigkeit | V/µm | 301 | 301 | 312 | 319 | 315 |
| Tangens bei 120 °C 1kHz | | 0,0179 | 0,0188 | 0,014 | 0,015 | 0,0172 |
| Tangens bei 30 °C 1 kHz | | 0,0045 | 0,0049 | 0,0047 | 0,0045 | 0,0048 |
| Spannungsprüfung | +/- | + | + | + | + | + |
| Lebensdauer | +/- | + | + | ++ | - | + |
| SMD-Lötbarkeit | +/- | + | + | + | + | - |
| Längsdickenschwankung | % | 9 | 7 | 6 | 8 | 4 |
| SV | | 883 | 894 | 895 | 780 | 886 |

+ = gut        ++ = sehr gut        (+) = mäßig        - = schlecht

EP 1 342 746 A1

**Patentansprüche**

1. Biaxial orientierte, hydrolysebeständige Folie, die als Hauptbestandteil einen kristallisierbaren Thermoplasten enthält und eine Dicke im Bereich von 0,5 bis 12,0 µm aufweist, **dadurch gekennzeichnet, dass** die Folie eine elektrische Durchschlagfestigkeit AC von ≥ 190 kV/mm besitzt, mindestens einen Hydrolysestabilisator enthält sowie leitfähig beschichtet ist.

2. Folie nach Anspruch 1, **dadurch gekennzeichnet, dass** der kristallisierbare Thermoplast ein Polyethylenterephthalat, Polybutylenterephthalat, Polyethylennaphthalat, bibenzolmodifiziertes Polyethylenterephthalat oder Mischungen daraus, vorzugsweise Polyethylenterephthalat, Polyethylennaphthalat oder bibenzolmodifiziertes Polyethylenterephthalat ist.

3. Folie nach Anspruch 1 oder 2, **dadurch gekennzeichnet, dass** die Konzentration des Hydrolysestabilisators im im Bereich von 0,2 Gew.-% bis 10,0 Gew.-%, vorzugsweise von 1,0 bis 4,0 Gew.-%, bezogen auf das Gewicht des kristallisierbaren Thermoplasten, liegt.

4. Folie nach einem oder mehreren der Ansprüche 1 bis 3, **dadurch gekennzeichnet, dass** als Hydrolysestabilisator Carbodiimide, vorzugsweise polymere Carbodiimide, enthalten sind.

5. Folie nach einem oder mehreren der Ansprüche 1 bis 4, **dadurch gekennzeichnet, dass** sie einen dielektrischen Verlustfaktor Tangens delta bei 1 kHz und 30 °C von < 0,0075 und einen Tangens delta bei 1 kHz und 120 °C von ≤ 0,3 besitzt.

6. Folie nach einem der Ansprüche 1 bis 5, **dadurch gekennzeichnet, dass** sie eine weitere Funktionalität aufweist.

7. Verfahren zur Herstellung einer biaxial orientierten, hydrolysebeständigen Folie, die als Hauptbestandteil einen kristallisierbaren Thermoplasten enthält und eine Dicke im Bereich von 0,5 bis 12 µm aufweist, **dadurch gekennzeichnet, dass** ein kristallisierbarerThermoplast und ein Hydrolysestabilisator nach einem Extrusionsverfahren zu einem flachen Schmelzefilm ausgeformt, mit Hilfe einer Kühlwalze abgeschreckt und die so erhaltene weitgehend amorphe Folie zur Verfestigung auf einer oder mehreren Walze/n abgezogen wird, die Folie anschließend biaxial gestreckt (orientiert) und die biaxial gestreckte Folie thermofixiert, aufgewickelt und mit einer leitfähigen Beschichtung versehen wird.

8. Verfahren nach Anspruch 7, **dadurch gekennzeichnet, dass** man nach der biaxialen Orientierung die Folie thermofixiert und um insgesamt 4 bis 15 % in Querrichtung relaxiert, wobei mindestens die letzten 2 % der Gesamtrelaxation bei Temperaturen unterhalb von 180 °C stattfinden.

9. Verfahren nach Anspruch 7, **dadurch gekennzeichnet, dass** der Hydrolysestabilisator, im Masterbatch neben dem Thermoplast in Mengen von 5,0 bis 60,0 Gew.-%, bevorzugt 10,0 bis 50,0 Gew.-%, jeweils bezogen auf das Gesamtgewicht des Masterbatches, enthalten ist.

10. Verfahren nach Anspruch 7, 8 oder 9, **dadurch gekennzeichnet, dass** die letzten 2 % der Gesamtrelaxation der Folie bei Temperaturen von vorzugsweise 180 bis 130 °C vorgenommen werden und die Gesamtrelaxation in Querrichtung vorzugsweise 5 bis 8 % beträgt.

11. Verwendung der Folie nach einem oder mehreren der Ansprüche 1 bis 6 zur Herstellung von Kondensatoren.

12. Verwendung nach Anspruch 11 als SMD-Kondensator.

13. Verwendung nach Anspruch 11 als Starterkondensatoren.

14. Verwendung nach Anspruch 11 als Entstörkondensatoren.

15. Starterkondensator, hergestellt unter Verwendung der Folie nach einem oder mehreren der Ansprüche 1 bis 6.

16. Entstörkondensator, hergestellt unter Verwendung der Folie nach einem oder mehreren der Ansprüche 1 bis 6.

17. SMD-Kondensator, hergestellt unter Verwendung der Folie nach einem oder mehreren der Ansprüche 1 bis 6.

**Europäisches Patentamt**

# EUROPÄISCHER RECHERCHENBERICHT

Nummer der Anmeldung

EP 03 00 3295

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 580 093 A (HOECHST AG) 26. Januar 1994 (1994-01-26) *, Sätze 4-9,13-19 * * Seite 11, Zeile 18-20,57 * --- | 1-17 | C08J5/18 |
| Y | US 5 804 626 A (ROGERS MARTIN EMERSON ET AL) 8. September 1998 (1998-09-08) * Spalte 2, Zeile 58-63 * * Spalte 7, Zeile 40-43 * --- | 1-17 | |
| Y | DE 41 29 980 A (BASF AG) 11. März 1993 (1993-03-11) * Spalte 2, Zeile 10,14 * * Anspruch 8 * --- | 1-17 | |
| Y | EP 0 982 116 A (MITSUBISHI POLYESTER FILM GMBH) 1. März 2000 (2000-03-01) * Anspruch 1 * * Absatz [0008] * --- | 1-17 | |
| Y | WO 98 13414 A (KURZ RAINER ;HORA FRANZ (DE); KUHMANN BODO (DE); SCHALLER ULRICH () 2. April 1998 (1998-04-02) * Seite 2, Zeile 9-13 * * Anspruch 1 * --- | 1-17 | RECHERCHIERTE SACHGEBIETE (Int.Cl.7) C08J |
| A | EP 0 803 538 A (NISSHIN SPINNING) 29. Oktober 1997 (1997-10-29) * Anspruch 1 * --- | 1-17 | |
| A | WO 01 53406 A (CRASS GUENTHER ;DIETZ WOLFGANG (DE); MITSUBISHI POLYESTER FILM GMB) 26. Juli 2001 (2001-07-26) * Anspruch 1 * --- | 1-17 | |
| A | DE 196 30 599 A (HOECHST AG) 5. Februar 1998 (1998-02-05) * Seite 3, Zeile 6-30 * --- | 1-17 | |

-/--

Der vorliegende Recherchenbericht wurde für alle Patentansprüche erstellt

| Recherchenort | Abschlußdatum der Recherche | Prüfer |
|---|---|---|
| MÜNCHEN | 15. Mai 2003 | Natus, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung

EP 03 00 3295

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| L | EP 1 262 511 A (MITSUBISHI POLYESTER FILM GMBH) 4. Dezember 2002 (2002-12-04)<br>* Absatz [0013] *<br>* Seite 11, Zeile 18 *<br>* Anspruch 1 *<br>--- | 1-17 | |
| L | EP 1 193 050 A (MITSUBISHI POLYESTER FILM GMBH) 3. April 2002 (2002-04-03)<br>* Absätze [0012],[0015] *<br>* Seite 10, Zeile 13,15 *<br>* Beispiele B24,B25 *<br>* Seite 21, Zeile 7 *<br>--- | 1-17 | |
| L | EP 1 297 948 A (MITSUBISHI POLYESTER FILM GMBH) 2. April 2003 (2003-04-02)<br>* Absätze [0012],[0069] *<br>* Anspruch 23 *<br>----- | 1-17 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| MÜNCHEN | 15. Mai 2003 | Natus, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**    EP 03 00 3295

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2003

| Im Recherchenbericht angeführtes Patentdokument | Datum der Veröffentlichung | Mitglied(er) der Patentfamilie | Datum der Veröffentlichung |
|---|---|---|---|
| EP 0580093 A | 26-01-1994 | DE 4224161 A1 | 27-01-1994 |
|  |  | DE 4238128 A1 | 19-05-1994 |
|  |  | CA 2100923 A1 | 23-01-1994 |
|  |  | DE 59308819 D1 | 03-09-1998 |
|  |  | EP 0580093 A1 | 26-01-1994 |
|  |  | JP 6199999 A | 19-07-1994 |
|  |  | MX 9304415 A1 | 28-02-1994 |
|  |  | US 5919536 A | 06-07-1999 |
| US 5804626 A | 08-09-1998 | US 5910363 A | 08-06-1999 |
|  |  | DE 69602262 D1 | 02-06-1999 |
|  |  | DE 69602262 T2 | 23-09-1999 |
|  |  | EP 0828793 A1 | 18-03-1998 |
|  |  | JP 11506487 T | 08-06-1999 |
|  |  | WO 9638504 A1 | 05-12-1996 |
| DE 4129980 A | 11-03-1993 | DE 4129980 A1 | 11-03-1993 |
| EP 0982116 A | 01-03-2000 | DE 19839007 A1 | 02-03-2000 |
|  |  | EP 0982116 A2 | 01-03-2000 |
|  |  | JP 2000129009 A | 09-05-2000 |
|  |  | KR 2000017588 A | 25-03-2000 |
|  |  | US 6409862 B1 | 25-06-2002 |
| WO 9813414 A | 02-04-1998 | DE 19639056 A1 | 26-03-1998 |
|  |  | DE 19736394 A1 | 25-02-1999 |
|  |  | DE 19736398 A1 | 25-02-1999 |
|  |  | DE 59705699 D1 | 17-01-2002 |
|  |  | WO 9813414 A1 | 02-04-1998 |
|  |  | WO 9813415 A1 | 02-04-1998 |
|  |  | EP 0929598 A1 | 21-07-1999 |
|  |  | EP 0929599 A1 | 21-07-1999 |
|  |  | KR 2000048553 A | 25-07-2000 |
|  |  | KR 2000048554 A | 25-07-2000 |
|  |  | US 6130311 A | 10-10-2000 |
|  |  | US 6268052 B1 | 31-07-2001 |
|  |  | JP 2001504047 T | 27-03-2001 |
| EP 0803538 A | 29-10-1997 | JP 3393752 B2 | 07-04-2003 |
|  |  | JP 9296097 A | 18-11-1997 |
|  |  | EP 0803538 A2 | 29-10-1997 |
|  |  | US 6126860 A | 03-10-2000 |
|  |  | US 5889096 A | 30-03-1999 |
| WO 0153406 A | 26-07-2001 | DE 10002158 A1 | 26-07-2001 |
|  |  | WO 0153406 A1 | 26-07-2001 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**     EP 03 00 3295

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2003

| Im Recherchenbericht angeführtes Patentdokument | | Datum der Veröffentlichung | Mitglied(er) der Patentfamilie | | Datum der Veröffentlichung |
|---|---|---|---|---|---|
| DE 19630599 | A | 05-02-1998 | DE | 19630599 A1 | 05-02-1998 |
| | | | AU | 4114497 A | 25-02-1998 |
| | | | WO | 9805708 A1 | 12-02-1998 |
| | | | TW | 379241 B | 11-01-2000 |
| EP 1262511 | A | 04-12-2002 | DE | 10126149 A1 | 05-12-2002 |
| | | | EP | 1262511 A2 | 04-12-2002 |
| | | | JP | 2003041030 A | 13-02-2003 |
| EP 1193050 | A | 03-04-2002 | DE | 10048720 A1 | 11-04-2002 |
| | | | DE | 10048721 A1 | 11-04-2002 |
| | | | EP | 1193050 A1 | 03-04-2002 |
| | | | JP | 2002187965 A | 05-07-2002 |
| | | | US | 2002065346 A1 | 30-05-2002 |
| EP 1297948 | A | 02-04-2003 | DE | 10148306 A1 | 24-04-2003 |
| | | | EP | 1297948 A2 | 02-04-2003 |

EPO FORM P0461

Für nähere Einzelheiten zu diesem Anhang : siehe Amtsblatt des Europäischen Patentamts, Nr.12/82